# EUROPEAN PATENT APPLICATION

(11) **EP 4 289 260 A1**
(43) Date of publication of application: **13.12.2023**
(21) Application number: 22178233.7
(22) Date of filing: 09.06.2022
(51) Int. Cl.: A01G 9/14, A01G 9/20, A01G 9/24

(54) **HYBRID SYSTEM FOR MONITORING AND MANAGING OF CROPS, ESPECIALLY IN AGRICULTURE**

(71) Applicant: PROMET-PLAST S.C. Elzbieta Jezewska, Andrzej Jezewski, 55-200 Olawa (PL)
(72) Inventor: Jezewski, Wojciech, Olawa (PL)
(74) Representative: Gornicki, Pawel

(57) **Abstract**

The disclosure relates to the hybrid system for monitoring and managing crops, especially in agriculture, powered by devices generating electricity from renewable energy sources, i.e. a hybrid set of photovoltaic panels (2) with at least one vertical axis wind turbine (3), installed on a supporting structure, which is placed on the load-bearing structure, at least 5m above the ground level. In order to protect the crops from hail, the system contains a perforated, anti-hail reflective coating (13), which additionally reflects the solar radiation. An important element of the system is an electric and electronic system including at least an inverter (20, 21) of the photovoltaic panels (2), an inverter (20, 21) of the wind turbine generator (3), a transformer (21, 22) with an inverter (20, 21), a pump (21) supplying sprinklers, an inverter (20, 21) in the MMS system, a weather station (27, 28), precision agriculture equipment position sensors (29, 30), a GPS sensor (28), a water level sensor (25) in the tank (11, 12, 26), all components connected to an energy storage (22, 23) and controlled by a BMS controller (23). The system is configured in such a way that it uses the energy quadrupole principle, where the installed generating capacity of primary units (31) generating electricity from renewable energy sources is directly proportional to the connection capacity, calculated through the energy storage (22, 23) capacity in MW

## Description

The subject of the invention is a hybrid system for monitoring and managing crops, especially in agriculture, powered by devices generating electricity from renewable energy sources. The subject of the invention can be used in agriculture.

Smart farming applications are not only oriented towards large applications, but also provide new levers to stimulate other common or growing trends in the field of ecological agricultural production, which is in line with the awareness of the European consumers and society and market trends. The use of renewable energy sources is also on the increase. Renewable energy, as an added value, plays an important role in the agricultural sector by reducing the consumption of fossil fuels, which in turn reduces the carbon footprint, and also positively affects the economic results of agricultural production. However, it is particularly important that crop management systems in sustainable agriculture take into account the water management, storage and distribution during the growing season, including rational irrigation of plants.

There are greenhouse structures additionally equipped with photovoltaic panels and / or wind turbines. A wind-solar greenhouse described in the utility model application CN205755968U is known; the greenhouse is equipped with a photovoltaic panel, a roof pillar and a vertical axis wind turbine; the vertical axis wind turbine is fixed at the upper end of the roof pole, and the transverse support is placed between adjacent roof poles to ensure the stability of the roof poles.

Additionally, under the greenhouse roof pillar there is a system of gutters to collect water from the panels and the greenhouse roof and discharge water into a tank.

Renewable energy is generated also outside the closed cultivation areas.

From the invention description P.430917 a solution is known in which a set of photovoltaic panels is placed on a load-bearing structure, which is placed on supports, at least 5 m above the ground level and connected to the electric network. The panels installed obliquely to the ground level are equipped with gutters which are connected to an underground tank. The tank is equipped with a pump connected to a soil sprinkler system and is combined with a supply system of fertilizers or plant protection products. The load-bearing structure is equipped with vertical axis wind turbines. The photovoltaic panels, turbines, pump and container for fertilizers and plant protection products are connected to a controller.

From the invention description P.434227 a similar design is known, but the photovoltaic panels are mounted on a load-bearing structure which is based on a circular raceway through two carriages equipped with a drive with a gear connected to a gear wheel. The gutters are connected to a pouring funnel located in the circular raceway axis and the pouring funnel is connected to the tank. Each drive motor is connected wirelessly to a controller which is connected to a sunlight sensor. At least four such modules can be connected to each other into units on the load-bearing structure, and in the centre between them, a modular vertical axis wind turbine is mounted.

The previously known solutions do not ensure the effective use of renewable energy sources in such a way as to fully utilize the energy potential while maintaining the land's cultivation function, regardless of the season and time of day.

The ineffectiveness results from a number of natural phenomena. The failure to use these phenomena in a timely manner leads to irretrievable loss of the potential energy yield.

The previously known designs of the units generating energy from renewable energy sources, which can be installed on arable land, do not protect crops from damage due to hailstorms. There are open spaces between the panel sections and between sections and tanks. Therefore the crops are directly exposed to hail.

It is equally important to ensure that such large structures, especially their foundations, installed on arable land exclude the smallest possible area of the land from cultivation.

Therefore, the purpose of the invention is to develop a structure that, together with a complete weather monitoring system, will solve the problem of the current state of the art.

A hybrid system for monitoring and managing crops, especially in agriculture, powered by devices generating electricity from renewable energy sources, i.e. a hybrid set of photovoltaic panels with at least one vertical axis wind turbine, installed on a supporting structure, which is placed on the load-bearing structure, at least 5m above the ground level and connected to the electric network, equipped with gutters connected to a pouring funnel, connected to a tank and a pump connected to a soil sprinkler system and equipped with a controller, characterized in that it contains
- a load-bearing structure which is square in plan and includes: columns installed in the corners, where each column is mounted on a root foundation consisting of at least a base plate with seats, poles and the column's mounting bolts, spans, struts, tank support frames, which elements are connected to each other;
- a supporting structure for the panel section consisting of panel spans, transverse spans, pillars and a crossbeam;
- panel sections consisting of bifacial photovoltaic panels mounted on the crossbeam of the supporting structure;
- a turbine mounted on at least four support points, which are the column and the panel spans converging to this column, with the entire working surface of the turbine located above the panel level
- water system consisting of gutters under the lower edges of the panel sections, drain pipes connecting these gutters with collecting gutters having a second end above the pouring funnel, a gutter discharging water from the funnel into the tank, a system of tanks with a triangle base connected to each other by means of hydraulic conduits and terminated with sprinklers arranged below the level of the tanks;
- a perforated anti-hail reflective coating stretched below the water system level;
- the electric and electronic system of the hybrid system including at least an inverter of the photovoltaic panels, an inverter of the wind turbine generator, a transformer with an inverter, a supply pump and an inverter in the MMS system, a weather station, all components connected to an energy storage and controlled by a BMS controller.
the system is configured in such a way that it uses the energy quadrupole principle, where the installed generating capacity of primary units generating electricity from renewable energy sources is directly proportional to the connection capacity, calculated through the energy storage capacity in MW.

It is preferred that the supporting structure of the photovoltaic panels is based on a circular raceway through two carriages equipped with a drive with a gear connected to a gear wheel, constituting an electromechanical follow-up system. The gutters are connected to a pouring funnel located in the circular raceway axis and the pouring funnel is connected to the tank. Each drive motor is connected wirelessly to a controller which is connected to a sunlight sensor.

It is preferred that the load-bearing structure of the photovoltaic panels with an electromechanical follow-up system is made of plate girder panel spans connected to the pipes which are a drainage gutter for rainwater flowing from the panel sections.

It is preferred that at least three double panel sections, formed by opening the sections at a β angle relative to each other, are fastened to the load-bearing structure of the photovoltaic panels.

It is preferred that the double panel section comprises a vertical light-reflecting element between the long edges.

It is preferred that the central double section comprises a convex light-reflecting element between the individual panels.

It is preferred that the perforated reflective coating is a polypropylene sheet made from waste from the production of disposable extruded packaging.

It is preferred that roller holders consisting of a clamp and two support rollers directed towards the inside of the structure and two guide rollers are mounted on the load-bearing structure's columns; the support rollers are at least twice as wide as the guide rollers, and all rollers have horizontal axes connected to the clamp in one plane from the side of the column.

It is also preferred that there is a running rail with a length greater than twice the distance of the load-bearing columns in the roller holder between the pairs of the support rollers and the pairs of the guide rollers.

It is preferred that a support frame for self-propelled devices and / or robots for supporting crop cultivation is installed between the running rails on the pillars of one panel set.

It is preferred that the electric and electronic system of the hybrid system additionally includes position sensors for precision agriculture equipment, a GPS sensor, a water level sensor in the tank, unmanned aerial vehicles such as drones or UAVs, Big Data, all connected with the energy storage and the controller.

It is preferred that the renewable energy source, in addition to the hybrid set of photovoltaic panels together with at least one wind turbine, also comprises:
a hydrogen generation unit with a hydrogen storage,
a biogas generation unit with a biogas storage,
and all units are connected to the energy storage; the hydrogen generation unit with the hydrogen storage is connected to the energy storage via a fuel cell and the biogas generation unit with the biogas storage is connected to the energy storage via a cogeneration unit.

The scope of this invention covers environmental protection, smart farming 4.0, water saving and renewable energy sources.Thanks to the hybrid system of control and cultivation of crops, barriers to the development of agriculture caused by drought, heat or other climatic anomalies (hail, frost, etc.) are removed. Due to the fact that soil is shaded and higher soil moisture is maintained the crop yield is increased and the land can be used for cultivation and generation of energy from renewable sources.

The plant cultivation in the hybrid system being the subject of the invention results in efficient use of resources in the circular economy, biological diversity, beneficial impact on climate protection by eliminating the pollution caused by agricultural machines powered by combustion engines and production of a significant amount of renewable energy. Another advantage of the system is that it has a positive effect on the environment, increasing local water retention and minimizing the use of chemicals.

In order to obtain 1 MW of installed capacity, a standard ground mounted photovoltaic system must occupy about 1.5 ha of land that is excluded from agricultural use. To obtain the same installed capacity, the hybrid system for monitoring and managing crops, according to the invention, must occupy about 1 ha of land that can be cultivated in a traditional manner.

It should be noted that the terms "installed", "connected with" and "connected to" used in the description of the present invention should be understood broadly and may mean, for example, a fixed connection or a detachable connection or integrally connected, a mechanical connection or an electrical connection. The connection may direct or indirect through an intermediate medium and there may be internal communication between the two components. The specific meanings of the above terms used in the description of the present invention can be understood by those skilled in the art in a specific case.

It should be noted that the terms "centre", "upper", "lower", "left", "right", "vertical", "horizontal", "inside", "outside" used in the description of the present invention are based on the orientation or positional relationship shown in the figures, and they are used only for the convenience of describing the present invention and simplified description, and they do not indicate or imply that the device or element in question has a specific orientation. Orientation and orientation design should not be interpreted as limiting the invention.

It should be noted that the terms "generator", "inverter", "transformer", "controller", "BMS", "MMS" used in the description of the present invention should be understood as complete sets that can function in the system being the subject of the invention and include such elements as switches, power supplies, common power strips for power output, inverters, power converters, software, servers, etc. The specific meanings of the above terms in the description of the present invention should be understood by those skilled in the art as complete and known in the current state of the art.

The technical solutions of the present invention will be described clearly and completely in conjunction with the attached drawings. It is obvious that the variants of the present invention are described and not the entire invention. Based on the present invention, all other variants obtained by those skilled in the art without creative effort are within the scope of the present invention.

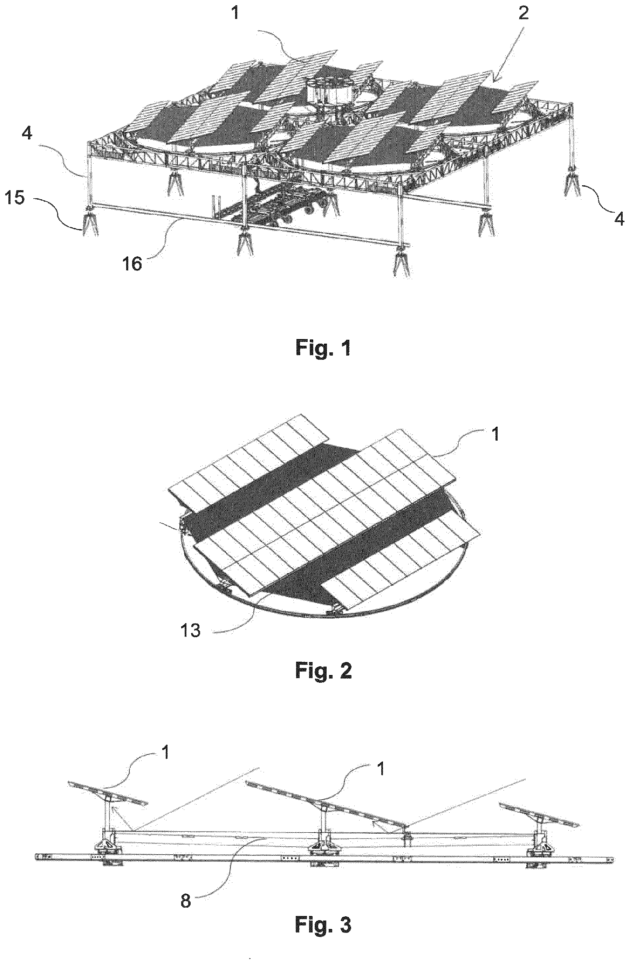

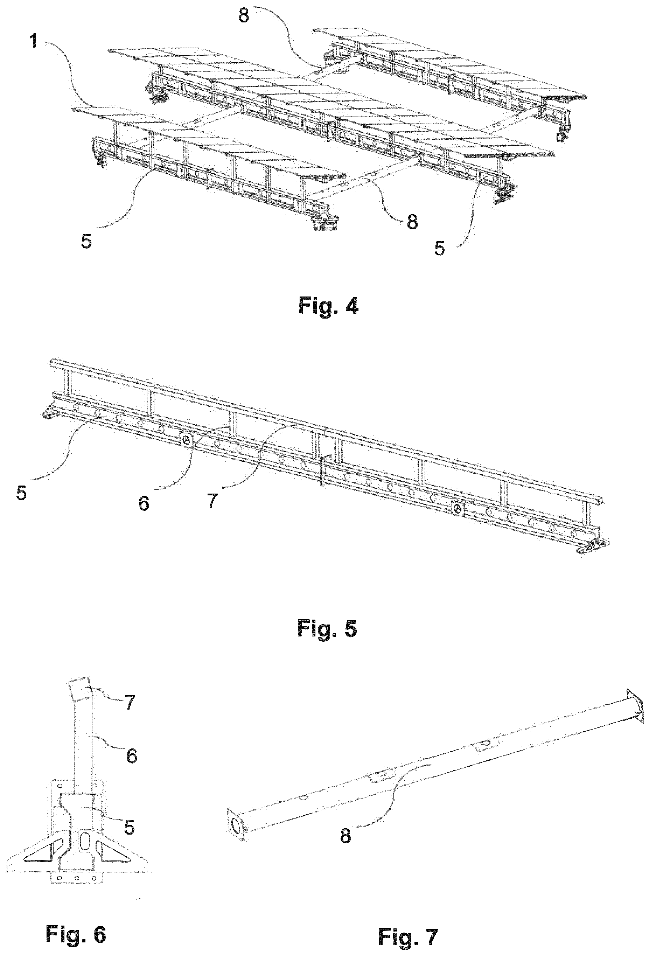

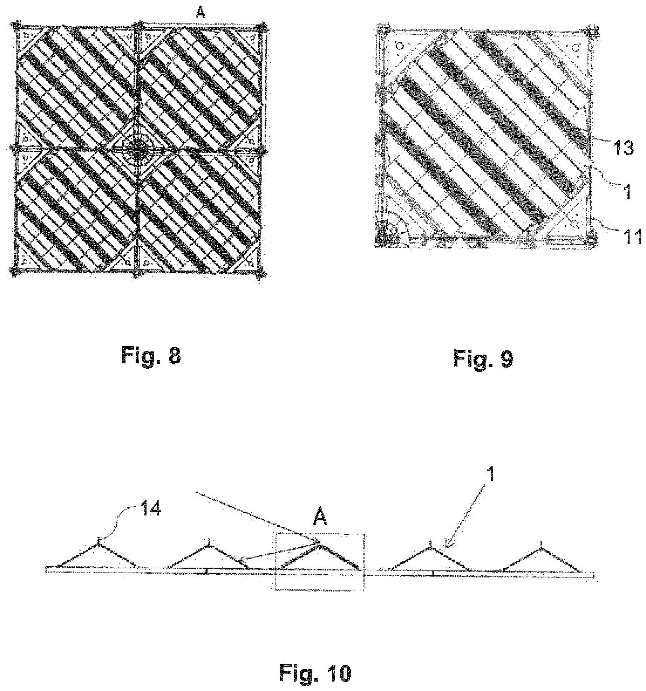

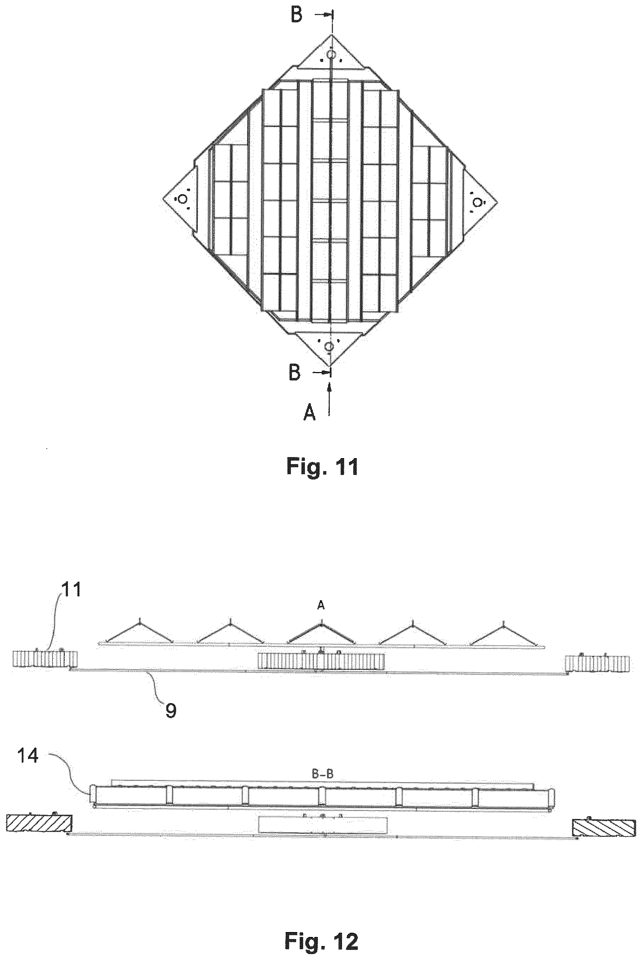

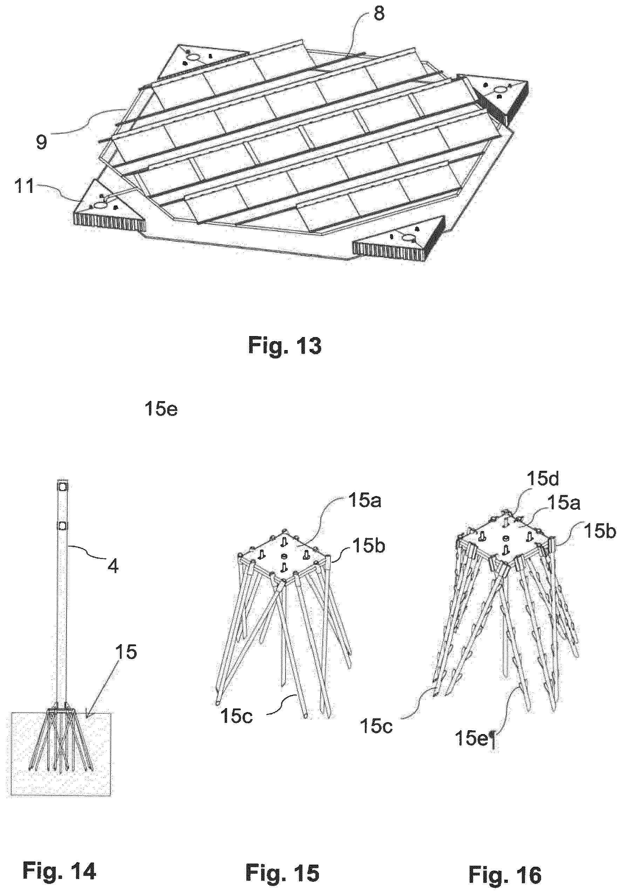

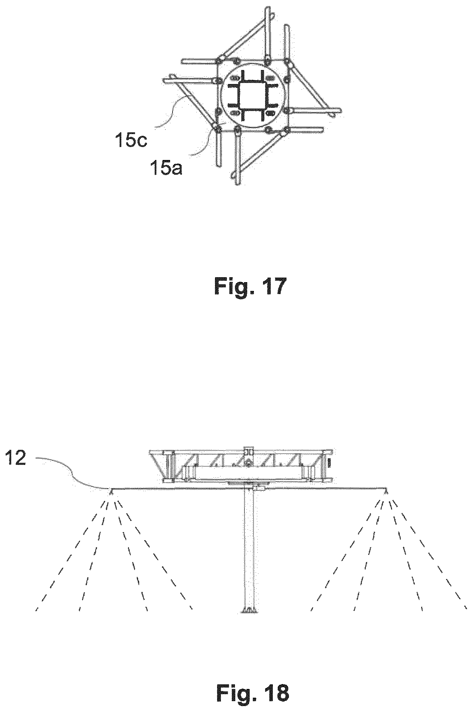

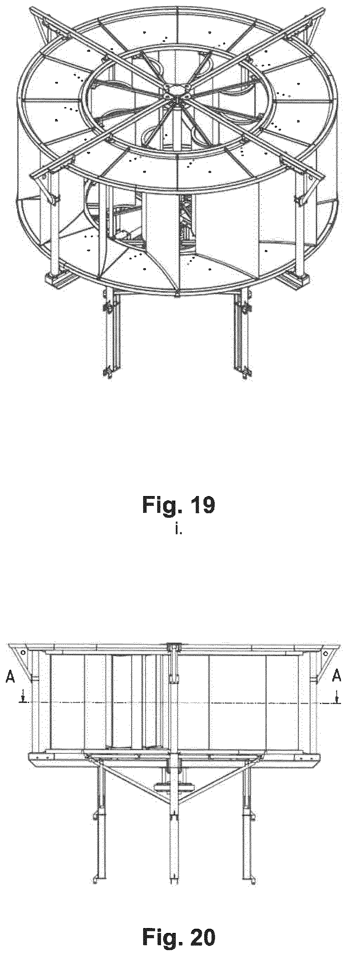

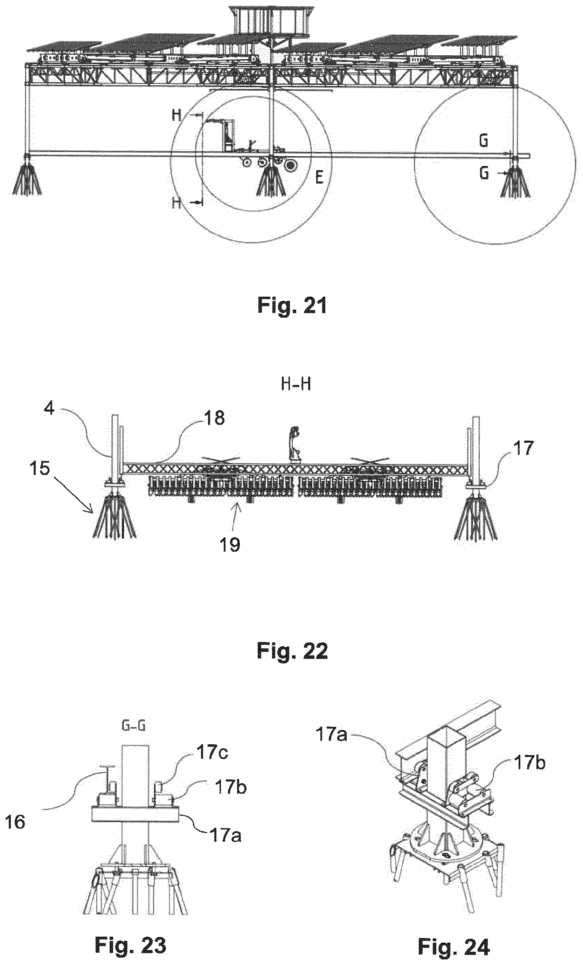

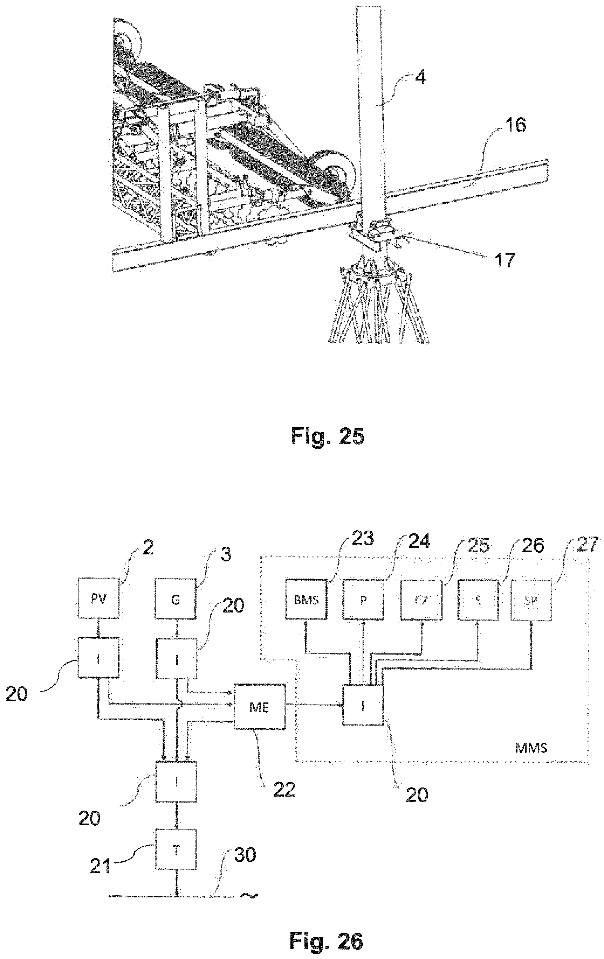

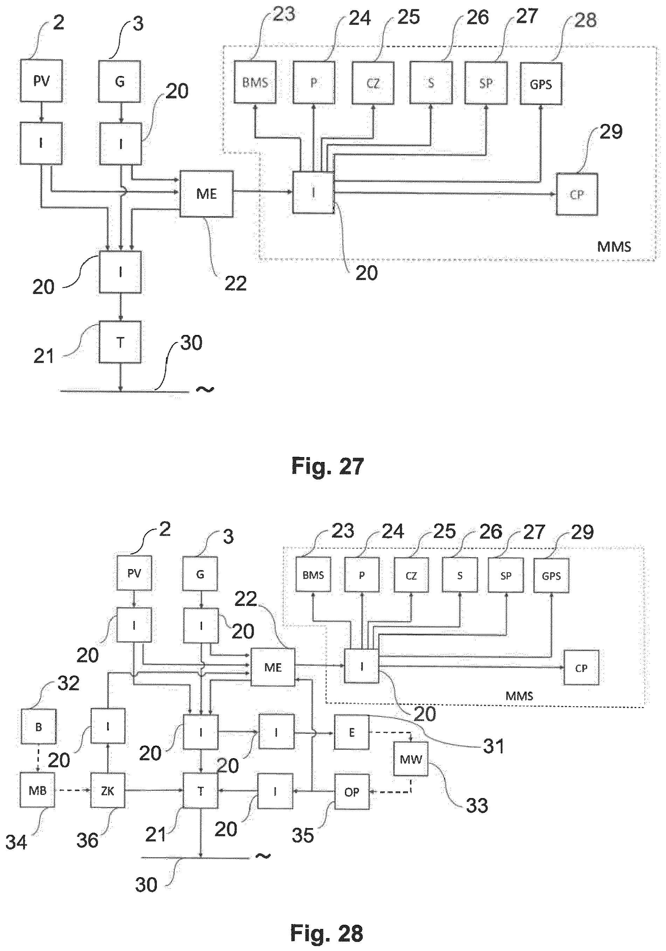

Fig. 1 is the general view of the hybrid system with a follow-up system of the panel set and with a perforated reflective coating under each load-bearing structure; Fig. 2 is a view of the panel set with a perforated reflective coating; Fig. 3 is a view of the panel set on the follow-up system with the reflection of sunlight from the perforated reflective coating; Fig. 4 is a pictorial view of the plate girder - tubular supporting structure of the panel set; Fig. 5 shows the span of the plate girder - tubular supporting structure; Fig. 6 shows the side view of the span of the plate girder - tubular supporting structure; Fig. 7 shows the pipe of the plate girder - tubular supporting structure; Fig. 8 is a top view of four sets of photovoltaic panels in the butterfly arrangement; Fig. 9 is a top view of a single set of photovoltaic panels in the butterfly arrangement; Fig. 10 shows a view of the panel set on the butterfly arrangement with the reflection of sunlight from the vertical light reflecting element; Fig. 11 is a top view of the water system of the panel set in the butterfly arrangement with the view A and section B-B marked; Fig. 12 is a side view of the water system of the panel set in the butterfly arrangement; Fig. 13 is a view of the water system of the panel set in the butterfly arrangement; Fig. 14 is a load-bearing column mounted on a root foundation; Fig. 15 shows the root foundation; Fig. 16 shows the root foundation with poles with protrusions; Fig. 17 is a top view of the foundation shown in Fig. 15; Fig. 18 shows is a part of the water system with visible pipes terminated with sprinklers; Fig. 19 shows a pictorial view of the vertical axis blade turbine with a blade rotor and guide vanes; Fig. 20 is a side view of the vertical axis blade turbine as in Fig. 19; Fig. 21 is a side view of the structure with the longitudinal member suspended on rollers; Fig. 22 is a front view of the lower part of the structure with the longitudinal member suspended on rollers; Fig. 23 is a front view of the load-bearing column of the structure with the longitudinal member suspended on rollers; Fig. 24 is a pictorial view of a part of the load-bearing column with the longitudinal member suspended on rollers; Fig. 25 shows a part of the load-bearing column with the longitudinal member suspended on rollers; Fig. 26 and Fig. 27 are block diagrams of various variants of the hybrid system with the MMS management unit;

Fig. 28 shows a block diagram of the hybrid system with the MMS management unit and additional renewable energy sources.

### Embodiment 1:

The hybrid system for monitoring and managing crops in agriculture, as shown in Figs 1-7, 14-17, 19-25, comprises four sets of photovoltaic panels **2,** which are a source of solar energy. Each panel set, together with at least one vertical axis wind turbine **3,** is installed on a post and beam load-bearing structure, which is placed on a supporting structure, at least 5m above the ground level and connected in a known manner to the electric network.

Each of the nine columns **4** of the load-bearing structure is set on a root foundation **15** as shown in Figs. 14-16. Such a foundation consists of a square base plate **15a** , which is placed at a surveyed and marked point and levelled, which on its circumference has twelve seats **15b** for matching poles **15c** driven into the ground at an angle different from 90° according to the principle that successive poles **15c** are driven in a sequence" diagonally "of the preceding pole and one seat **15b** located centrally in the base plate **15a,** into which the pole **15c** is driven first at an angle of 90°. The length of the poles is such that they are securely fixed in the ground. They are "spaced" in the ground to ensure a stable and strong anchoring of the base plate **15a.** Then, the column **4** of the load-bearing structure is bolted to the mounting bolts **15d** in the plate.

This solution ensures a relatively faster and more cost-effective way of erecting poles without the need to dig large holes and use significant amounts of cement or concrete, which primarily allows traditional soil cultivation to be carried out in the vicinity of such a foundation.

In another possible embodiment of such a root foundation **15** , the poles **15c** include projections **15e** on the circumference to better stabilize the foundation in the ground and prevent it from moving horizontally and twisting. The assembly is carried out in such a way that after driving the central pole **15c** the poles **15c** with projections **15e** are driven by inserting them into the appropriate seats **15b** in the base plate. After installing all poles **15c** with projections **15e ,** level the adjustment bolts protruding from the plate, and then you can start bolting the column **4** of the structure.

Individual prefabricated segments of the load-bearing structure, such as columns, foundations, spans, struts and tank support frames are connected with each other by means of bolted connections.

The supporting structure of the photovoltaic panel set **2** is a plate girder - tubular structure consisting of panel spans **5** connected from the front pipes **8,** which also act as a gutter draining water to gutters **9** located under the panel sections **1.**

The discharge gutters **9** are connected to the pouring funnel **10** connected to a tank **11** installed in the corner on the load-bearing structure and a pump **21** connected to a soil sprinkler system and equipped with a controller **20.** The load-bearing structure of the photovoltaic panels is based on a circular raceway through two carriages equipped with a drive with a gear connected to a gear wheel, constituting an electromechanical follow-up system. The gutters **9** are connected to the pouring funnel **10** located in the circular raceway axis and the pouring funnel **10** is connected to the tank **11.** Each drive motor **23** is connected wirelessly to the controller **20**which is connected to a sunlight sensor.

The plate girder profile is used in order to simplify the production process. For comparison, in the previously known version, where a truss is used as panel spans, welding and cutting of 250 profiles is required. When using a bent plate girder, there are only a few profiles, a large number of welding operations is not required and structural deformations caused by welding process heat are reduced. The tubular structure, just like the plate girder structure, also requires less work, because instead of cutting and welding 200 profiles (as in the case of a spatial truss), one pipe is cut, in which water can flow at the same time, and an additional drain pipe is no longer needed in this section. The plate girder - tubular span is cheaper and faster to manufacture.

Under each set of photovoltaic panels **2,** a perforated reflective coating **13**is stretched below the water system level; the reflective coating consists of polypropylene sheets which are made from the waste from the production of disposable packaging.

During a hailstorm, hail penetrating between the panel sections **1** is slowed down or retained on the perforated coating **13,** then, after melting, it flows onto the crop. When the sun is shining, the reflective coating **13** reflects sunlight onto the underside of the bifacial photovoltaic panels.

On the columns **4** of the load-bearing structure, there are roller holders **17**consisting of a clamp **17a** and two support rollers **17b** directed towards the inside of the structure and two guide rollers **17c,** all with horizontal axes. The support rollers **17b** are twice as wide as the guide rollers **17c.** The rollers **17b** and **17c** are connected to the clamp **17a** in one plane on the side of the column **4.** In the roller holder **17** between the pairs of the support rollers **17b** and the pairs of the guide rollers **17c,** there is a running rail **16** with a length greater than twice the distance of the load-bearing columns **4.** Between the running rails **16** located on the columns **4** of one panel set **2 ,** a support frame **18** for self-propelled devices and / or robots **19** for supporting crop cultivation (sowing seeds, fertilizing, harvesting crops) is installed.

In addition to the mechanical elements, the system for monitoring and managing crops called AHE (Agro-Hydro-Energy) also includes a DC/DC inverter **20** for photovoltaic panels, which stabilizes the operating voltage of the photovoltaic panels and supports their operation by monitoring the maximum power point (MPP). The PV panels **2** are loaded according to the power curve of the photovoltaic panels in such a way as to achieve the maximum generated power. The electrical current output from the inverter **20** is transferred to the energy storage **22** and / or to the DC / AC inverter **20** which outputs voltage to the power grid **30.** The inverter operation **20** is managed and monitored by the controller **23.** An AC / DC inverter **20** of the wind turbine generator is connected to the wind turbine generator **3.** The inverter changes the AC voltage of the generator **3** to DC voltage and monitors the operation of the generator **3** by loading it in order to obtain the maximum power point (MPP).

The loaded generator **3** makes it possible to obtain more power from the wind turbine operation. The electrical current output from the inverter **20** is transferred to the energy storage **22** and / or to the DC / AC inverter **20** which outputs voltage to the power grid **30.** The DC / AC inverter **20** upstream of the transformer **21** allows for synchronization of operation with the power grid **30.** The task of the inverter **20** upstream of the transformer **21** is to change the DC voltage of the generating units into AC voltage with the operating frequency of the power grid. The inverter operation is managed and monitored by the controller **23.** Another element of the AHE system is the transformer **21,** which changes the low voltage from generating sources or energy storage to medium voltage with the power grid parameters. The energy storage **22** stores surplus electricity for use at a different time. The charge level of the energy storage **22,** its loading and unloading are managed and monitored by the controller **23.** The water pump **24** increases water pressure in the irrigation system. The pump is powered from the energy storage. The water level sensor **25** in the tank **11** indicates the height of the water column in the tank **11.** The sensor **25** is powered from the energy storage **22.** Electric motors **26** drive the follow-up system of the photovoltaic panel set **2.** The motors **26** are powered from the energy storage **22.** The weather station **27** collects meteorological data. The data from the weather station **27**and, for example, the data from the soil moisture sensors make it possible to control the water resources in the tanks **11**in the most rational manner taking into account the current weather conditions and weather forecasts. The station **27** is powered from the energy storage **22.** The GPS sensor **28** determines the position of the structure being the subject of the invention in space using the satellite connection. The sensor is powered from the energy storage **22.** In addition, the precision agriculture equipment position sensors **29** determine the position of agricultural machines between the columns **4** of the structure. The sensors **29** are powered from the energy storage **22.** The DC / DC inverter **20** in the MMS system changes the voltage from the energy storage **22** to the voltage required for the operation of devices such as, among others: controller, pump, water sensor, motors, weather station. The entire data is managed by the controller **23** of the AHE smart management system, which communicates with the devices, monitors and manages their operation. The BMS controller **23** is powered from the energy storage **22.**

The system is configured in such a way that it uses the energy quadrupole principle, described in more detail in the patent application P.437157, where the installed generating capacity of primary units generating electricity from renewable energy sources is directly proportional to the connection capacity, calculated through the energy storage capacity in MW.

This means that for 1 MW of connection capacity, a RES hybrid system consisting of photovoltaic panels with a capacity of 3.0 MW and a wind turbine with a capacity of 0.9 MW and a storage of energy obtained from these RES with a capacity of 12.8 MWh can be connected to the power grid.

A block diagram of such a system is shown in Fig. 27.

### Embodiment 2:

The hybrid system for monitoring and managing crops as in embodiment 1, except that a panel set **2**consisting of three double panel sections**1** formed by opening the panels at a β angle relative to each other is mounted on the supporting structure of the photovoltaic panels. This arrangement is called a butterfly arrangement. Between the long edges of the panels forming the double panel section **1,** there is a vertical light-reflecting element **14.** Its task is to reflect a beam of sunlight at a smaller angle of incidence of sunlight and transmit it to the adjacent section. In addition, the longest central double section **1** comprises a convex light-reflecting element **14**between the individual panels. Its task is to reflect a beam of sunlight at a smaller angle of incidence of sunlight and transmit it to the adjacent section.

Such a variant of the invention is shown in Figs. 8-20 and Figs. 22-25. Embodiment 3:
The hybrid system for monitoring and managing crops as in embodiment 1, except that the renewable energy source, in addition to the hybrid set of photovoltaic panels **2** together with at least one wind turbine **3,** is also a unit generating "green" hydrogen **31** obtained by electrolysis of water obtained from rainwater, with a hydrogen storage **33,** a biogas generating unit **32** with a biogas storage **34.** All units **31, 32, 33, 34** are connected to the energy storage **22;** the hydrogen generation unit **31** with the hydrogen storage **33** is connected to the energy storage **22** via a fuel cell **35** and the biogas generation unit **32** with the biogas storage **34** is connected to the energy storage **22** via a cogeneration unit **34.**

A block diagram of such a system is shown in Fig. 28.

Each such structure, described in the embodiments above, and containing:
a load-bearing structure;
a supporting structure;
photovoltaic panel sections;
water system with 4 plastic tanks
is a single module that can be multiplied; the supporting structure will be limited to common columns for adjacent units. A wind turbine can be installed on each column if, in addition to the column which is a central support, there are three support points on the panel spans. The outermost modules may consist of three units, this is the minimum for the wind turbine to have a sufficient number of support points on the supporting structure. The entire system can be connected with one monitoring system which analyses the weather conditions, soil moisture in the entire area and water level in all tanks.

### List of designations

1. photovoltaic panel section
2. photovoltaic panel set
3. wind turbine with generator
4. column
5. panel span
6. pillar
7. crossbeam
8. pipe
9. gutter
10. pouring funnel
11.tank
12.sprinkler
13. perforated reflective coating
14.light-reflecting element
15. root foundation
15a. base plate
15b. seat
15c. pole
15d. mounting bolt
15e. protrusion
16. running rail
17.roller holder
17a. clamp
17b. support roller
17c. guide roller
18. support frame
19.self-propelled device
20. inverter
21.transformer
22.energy storage
23.controller
24.water pump
25.water level sensor in the tank
26.electrical motor
27.weather station
28.GPS sensors of system position
29. precision agriculture equipment position sensors
30. power grid
31.hydrogen generation unit
32.biogas generation unit
33. hydrogen storage
34. biogas storage
35.fuel cell
36. cogeneration unit

## Claims

1. A hybrid system for monitoring and managing crops, especially in agriculture, powered by devices generating electricity from renewable energy sources, i.e. a hybrid set of photovoltaic panels with at least one vertical axis wind turbine, installed on a supporting structure, which is placed on the load-bearing structure, at least 5m above the ground level and connected to the electric network, equipped with gutters connected to a collecting funnel, connected to a tank and a pump connected to a soil sprinkler system and equipped with a controller, **characterized in that**it contains
• a load-bearing structure which is square in plan and includes columns (4) installed in the corners, where each column (4) is mounted on a root foundation (15) consisting of at least a base plate (15a) with seats (15b), poles (15c), the column's mounting bolts (15d), spans, struts, tank support frames, which elements are connected to each other;
• a supporting structure for the panel section consisting of panel spans (5), transverse spans (8), pillars (6) and a crossbeam (7);
• photovoltaic panel sections (1) consisting of bifacial photovoltaic panels mounted on the crossbeam (7) of the supporting structure;
• a vertical axis wind turbine (3) mounted on at least four support points, which are the column (4) and the panel spans (5) converging to this column (4), with the entire working surface of the turbine (3) located above the panel level;
• a water system consisting of gutters (9) under the lower edges of the panel sections (1), drain pipes connecting these gutters with collecting gutters having a second end above the pouring funnel (10), a gutter (9) discharging water from the funnel (10) into a tank (11), a system of tanks (11) with a triangle base connected to each other by means of hydraulic conduits and terminated with sprinklers (12) arranged below the level of the tanks (11);
• a perforated anti-hail reflective coating (13) stretched below the water system level;
• an electric and electronic system of the hybrid system including at least an inverter (20) of the set of photovoltaic panels, an inverter (20) of the wind turbine generator (3), an electrical motor (26), a transformer (21) with the inverter (20), a water pump (24) supplying sprinklers (12) and the inverter (20) in the MMS system, a weather station (27), all components connected to an energy storage (22) and controlled by a BMS controller (23);
the system is configured in such a way that it uses the energy quadrupole principle, where the installed generating capacity of primary units generating electricity from renewable energy sources is directly proportional to the connection capacity, calculated through the energy storage capacity in MW.

2. The hybrid system, according to claim 1, **characterized in that** the supporting structure of the photovoltaic panels is based on a circular raceway through two carriages equipped with a drive (26) with a gear connected to a gearwheel, constituting an electromechanical follow-up system, and the drive motor (26) is connected wirelessly to the controller (23), which is connected to a sunlight sensor, and the gutters (9) are connected to the pouring funnel (10) located in the circular raceway axis and the pouring funnel (10) is connected to the tank (11).

3. The hybrid system, according to claim 2, **characterized in that** the load-bearing structure of the photovoltaic panels with an electromechanical follow-up system is made of plate girder panel spans (5) connected to the pipes (8) which are a drainage gutter (9) for rainwater flowing from the panel sections (1).

4. The hybrid system, according to claim 1 or 2, **characterized in that** at least three double panel sections (1), formed by opening the panels at a β angle relative to each other, are fastened to the load-bearing structure of the photovoltaic panels.

5. The hybrid system, according to claim 4, **characterized in that** the double panel section (1) comprises a vertical light-reflecting element (14) between the long edges.

6. The hybrid system, according to claim 4, **characterized in that** the central double section (1) comprises a convex light-reflecting element (14) between the individual panels.

7. The hybrid system, according to claim 1, **characterized in that the** perforated reflective coating (13) is a polypropylene sheet made from waste from the production of disposable extruded packaging.

8. The hybrid system, according to claim 1, **characterized in that** roller holders (17) consisting of a clamp (17a) and two support rollers (17b) directed towards the inside of the structure and two guide rollers (17c) are mounted on the load-bearing structure's columns; the support rollers (17b) are at least twice as wide as the guide rollers (17c), and all rollers (17b, 17c) have horizontal axes connected to the clamp (17a) in one plane from the side of the column (4).

9. The hybrid system, according to claim 8, **characterized in that** in the roller holder (17) between the pairs of the support rollers (17b) and the pairs of the guide rollers (17c), there is a running rail (16) with a length greater than twice the distance of the load-bearing columns (4).

10. The hybrid system, according to claim 9, **characterized in that** between the running rails (16) located on the columns (4) of one panel set (2), a support frame (18) for self-propelled devices and / or robots (19) for supporting crop cultivation is installed.

11. The hybrid system, according to claim 1, **characterized in that** the electric and electronic system of the hybrid system additionally includes position sensors for precision agriculture equipment (29), a GPS sensor (28), a water level sensor in the tank (25), unmanned aerial vehicles, Big Data, all connected with the energy storage (22) and the controller (23).

12. The hybrid system, according to claim 1, **characterized in that** the renewable energy source, in addition to the set of photovoltaic panels (2) together with at least one wind turbine (3), also comprises:
• a hydrogen generation unit (31) with a hydrogen storage (32),
• a biogas generation (33) unit with a biogas storage (34),
and units (31, 32, 33, 34) are connected to the energy storage (22); the hydrogen generation unit (31) with the hydrogen storage (32) is connected to the energy storage (22) via a fuel cell (35) and the biogas generation unit (32) with the biogas storage (34) is connected to the energy storage (22) via a cogeneration unit (36).
